# EUROPEAN PATENT APPLICATION

(11) **EP 1 156 147 A1**
(43) Date of publication of application: **21.11.2001**
(21) Application number: 00304179.5
(22) Date of filing: 17.05.2000
(51) Int. Cl.: D04H 13/00, B32B 5/26, D04H 5/00

(54) **Non-woven composite fabric**

(71) Applicant: KANG NA HSIUNG ENTERPRISE CO. LTD., Tainan Hsien (TW)
(72) Inventor: Tai, Jung Chi, Chiali Chen, Tainan Hsien (TW); Hu, Alvin Yen-Jung, Hsinchu (TW)
(74) Representative: Nash, David Allan

(57) **Abstract**

The present invention provides a non-woven composite fabric and a process for preparing the same. The non-woven fabric includes at least three webs which are consolidated together. At least one web is an air-laid web, and at least one web is a spunbonded web or a meltblown web. The present invention can use a functional air-laid web in order to impart the non-woven composite fabric with various functions.

## Description

### BACKGROUND OF THE INVENTION

### 1. Field of the Invention:

The present invention relates to a non-woven composite fabric and a process for preparing the same, and more particularly to a non-woven composite fabric including at least three webs, in which at least one web is an air-laid web.

### 2. Description of the Prior Art:

Non-woven fabrics have been extensively used in household and medical applications. For example, such fabrics have been used as disposable diapers, sanitary napkins, and surgical clothes. A non-woven fabric can be formed by consolidating a multiple layers of webs. For example, in Taiwan Patent Publication No. 375664, a spunbonded/meltblown multi-layered non-woven composite fabric has been disclosed, which includes a spunbonded web/at least one meltblown web/a spunbonded web, in which the average diameter of the fiber of the meltblown web is far finer than that of the fiber of the spunbonded web. This non-woven composite fabric is relatively good on barrier properties, but other properties still need further improvement.

### SUMMARY OF THE INVENTION

Therefore, the object of the present invention is to provide a novel non-woven composite fabric. The present invention can use a functional air-laid web in order to impart the non-woven composite fabric with various functions.

To achieve the above object, the non-woven composite fabric of the present invention includes at least three webs which are consolidated together. At least one web is an air-laid web, and at least one web is a web selected from the group consisting of a spunbonded web and a meltblown web.

### DETAILED DESCRIPTION OF THE INVENTION

The non-woven composite fabric of the present invention includes at least three webs which are consolidated together. At least one web is an air-laid web, and at least one web is a spunbonded web or a meltblown web.

The non-woven composite fabric of the present invention can have various combinations. For example, the non-woven composite fabric can include an air-laid web (abbreviated to A), a spunbonded web (abbreviated to S), and a meltblown web (abbreviated to M). One representative example of such a non-woven composite fabric includes a spunbonded web, a meltblown web, and an air-laid web laminated in order, such that an SMA non-woven fabric is formed. Another representative non-woven composite fabric includes a spunbonded web, an air-laid web, and a meltblown web laminated in order, such that an SAM non-woven fabric is formed.

Alternatively, the non-woven composite fabric of the present invention can include an air-laid web and two spunbonded webs. A representative example includes a spunbonded web, an air-laid web, and a spunbonded web laminated in order, such that an SAS non-woven fabric is formed.

Alternatively, the non-woven composite fabric of the present invention can include an air-laid web, a meltblown web, and two spunbonded webs. A representative example includes a spunbonded web, a meltblown web, an air-laid web, and a spunbonded web laminated in order, such that an SMAS non-woven fabric is formed.

Alternatively, the non-woven composite fabric of the present invention can include a spunbonded web, a meltblown web, an air-laid web, a meltblown web, and a spunbonded web laminated in order, such that an SMAMS non-woven fabric is formed.

The air-laid web used in the present invention can be formed by subjecting a raw material in the form of fibers, particles, or powders to an air-laying process. Suitable raw material can be pulp, activated carbon fibers or powders, super absorbent polymer (SAP) fibers or powders, hot melt adhesive fibers or powders, water-absorbent fibers, particles, or powders, oil-absorbent fibers or powders, chemical adsorbent fibers or particles, deodorant fibers or powders, or mixture thereof.

According to the present invention, a functional raw material can be subjected to air-laying to obtain a functional air-laid web. Then, the functional air-laid web can be used in order to impart the composite non-woven fabric with various functions. For example, when the raw material for the air-laid web is pulp or a super absorbent polymer, it can impart the composite non-woven fabric with absorption. When the raw material for the air-laid web includes pulp and a super absorbent polymer, the absorption of the composite non-woven fabric can be further improved. When the raw material for the air-laid web is activated carbon fibers (or particles or powders), it can impart the composite non-woven fabric with chemical adsorption. When the raw material for the air-laid web includes pulp and hot melt adhesive powders, high stiffness can be imparted to the fabric. When the raw material is adsorbent fibers or powders, chemical adsorption can be imparted to the fabric.

In the above-mentioned SMA non-woven fabric, if the raw material for the air-laid web is an absorbent material (such as a super absorbent polymer), since the air-laid web in the outer layer can provide absorption and the meltblown web in the inner layer has water repellency, such an SMA non-woven fabric can be used as a sanitary napkin material. In addition, in the above-mentioned SAM non-woven fabric, if the raw material for the air-laid web is an absorbent material (such as a super absorbent polymer), since the air-laid web in the inner layer can provide absorption and the meltblown web in the outer layer has water repellency, such an SAM non-woven fabric can be used as surgical clothes.

The spunbonded web used in the present invention can be composed of mono-component fiber or bi-component fiber of a melt spinning polymer. Also, the meltblown web used in the present invention can be composed of mono-component fiber or bi-component fiber of a melt spinning polymer.

Suitable melt spinning polymer can be polypropylene (PP), polyethylene (PE), polyethylene terephthalate (PET), polybutylene terephthalate (PBT), a copolymer of polypropylene (COPP), a copolymer of polyethylene terephthalate (COPET), a copolymer of polybutylene terephthalate (COPBT), or a polyamide.

When the fiber of the spunbonded web or the meltblown web of the present invention is a bi-component fiber, such bi-component fiber can be made of polypropylene/polyethylene (PP/PE), polyethylene terephthalate/polyethylene (PET/PE), polyethylene terephthalate/polypropylene (PET/PP), polypropylene/a copolymer of polypropylene (PP/COPP), polyethylene terephthalate/a copolymer of polyethylene terephthalate (PET/COPET), or a higher melting polyamide/a lower melting polyamide.

The bi-component fiber of the melt spinning polymer can include a lower melting component and a higher melting component. At that time, the fiber can be of sheath and core type or side by side type.

Alternatively, the bi-component fiber can be a micro fiber, such as split type micro fiber or sea and island micro fiber.

The present invention also provides a process for preparing a non-woven composite fabric. First, at least three webs are formed, in which at least one web is an air-laid web, and at least one web is a spunbonded web or a meltblown web. Then, the at least three webs are consolidated together to form a non-woven composite fabric. Suitable consolidating method is not limited and can be thermo-bonding, hot air-through bonding, water-jet entangling, ultrasonic bonding, and high frequency wave bonding.

The following examples are intended to illustrate the process and the advantages of the present invention more fully without limiting its scope, since numerous modifications and variations will be apparent to those skilled in the art.

### Example 1

The bottom layer was a spunbonded web (abbreviated to S) having a weight basis of 10 g/cm². A meltblown web (20 g/cm²) (abbreviated to M) was laid onto the bottom layer as the second layer. Then, an air-laid web (250 g/cm²) (abbreviated to A) was laid onto the second layer as the third layer. Finally, a spunbonded web (20 g/cm²) (abbreviated to S) was laid onto the third layer as the fourth layer. The four-layered laminate was thermally bonded together to form an SMAS composite non-woven fabric. The properties are shown in Table 1.

From Table 1, it can be seen that the properties of the composite non-woven fabric of the present invention meet the CNS standard.

**Table 1.**

| The properties of the SMAS non-woven fabric | | |
|---|---|---|
| Properties | SMAS of the present invention | CNS standard |
| Longitude Penetration length (cm) | 6.8 | N.A. |
| Rewet (g) | 0.065 | < 2g |
| Hydro head (cm H₂O) | 57.6 | N.A. |
| Air permeability (L/M²·sec) | 11,513 | N.A. |
| Moisture permeability (g/m²×24hr) | 9,320 | N.A. |

The foregoing description of the preferred embodiments of this invention has been presented for purposes of illustration and description. Obvious modifications or variations are possible in light of the above teaching. The embodiments were chosen and described to provide the best illustration of the principles of this invention and its practical application to thereby enable those skilled in the art to utilize the invention in various embodiments and with various modifications as are suited to the particular use contemplated. All such modifications and variations are within the scope of the present invention as determined by the appended claims when interpreted in accordance with the breadth to which they are fairly, legally, and equitably entitled.

## Claims

1. A non-woven composite fabric, comprising:
at least three webs which are consolidated together,
wherein at least one web is an air-laid web, and at least one web is a web selected from the group consisting of a spunbonded web and a meltblown web.

2. The non-woven composite fabric as claimed in claim 1, which includes an air-laid web, a spunbonded web, and a meltblown web.

3. The non-woven composite fabric as claimed in claim 2, which includes a spunbonded web, a meltblown web, and an air-laid web laminated in order.

4. The non-woven composite fabric as claimed in claim 2, which includes a spunbonded web, an air-laid web, and a meltblown web laminated in order.

5. The non-woven composite fabric as claimed in claim 1, which includes an air-laid web and two spunbonded webs.

6. The non-woven composite fabric as claimed in claim 5, which includes a spunbonded web, an air-laid web, and a spunbonded web laminated in order.

7. The non-woven composite fabric as claimed in claim 1, which includes an air-laid web, a meltblown web, and two spunbonded webs.

8. The non-woven composite fabric as claimed in claim 7, which includes a spunbonded web, a meltblown web, an air-laid web, and a spunbonded web laminated in order.

9. The non-woven composite fabric as claimed in claim 1, which includes a spunbonded web, a meltblown web, an air-laid web, a meltblown web, and a spunbonded web laminated in order.

10. The non-woven composite fabric as claimed in claim 1, wherein the air-laid web is made of a material selected from the group consisting of pulp, activated carbon fibers or powders, super absorbent polymer fibers or powders, hot melt adhesive fibers or powders, water-absorbent fibers, particles, or powders, oil-absorbent fibers or powders, chemical adsorbent fibers or particles, deodorant fibers or powders, and mixture thereof.

11. The non-woven composite fabric as claimed in claim 1, wherein the spunbonded web is composed of mono-component fiber or bi-component fiber of a melt spinning polymer.

12. The non-woven composite fabric as claimed in claim 1, wherein the meltblown web is composed of mono-component fiber or bi-component fiber of a melt spinning polymer.

13. The non-woven composite fabric as claimed in claim 11 or 12, wherein the melt spinning polymer is selected from the group consisting of polypropylene (PP), polyethylene (PE), polyethylene terephthalate (PET), polybutylene terephthalate (PBT), a copolymer of polypropylene (COPP), a copolymer of polyethylene terephthalate (COPET), a copolymer of polybutylene terephthalate (COPBT), and a polyamide.

14. The non-woven composite fabric as claimed in claim 11 or 12, wherein the bi-component fiber of the melt spinning polymer is made of a material selected from the group consisting of polypropylene/polyethylene (PP/PE), polyethylene terephthalate/polyethylene (PET/PE), polyethylene terephthalate/polypropylene (PET/PP), polypropylene/a copolymer of polypropylene (PP/COPP), polyethylene terephthalate/a copolymer of polyethylene terephthalate (PET/COPET), and a higher melting polyamide/a lower melting polyamide.

15. The non-woven composite fabric as claimed in claim 11 or 12, wherein the bi-component fiber of the melt spinning polymer includes a lower melting component and a higher melting component.

16. The non-woven composite fabric as claimed in claim 11 or 12, wherein the bi-component fiber of the melt spinning polymer is a micro fiber.

17. The non-woven composite fabric as claimed in claim 1, wherein the webs are consolidated by a method selected from the group consisting of thermo-bonding, hot air-through bonding, water-jet entangling, ultrasonic bonding, and high frequency wave bonding.

18. A process for preparing a non-woven composite fabric, comprising:
forming at least three webs, wherein at least one web is an air-laid web, and at least one web is a web selected from the group consisting of a spunbonded web and a meltblown web; and
consolidating the at least three webs into the non-woven composite fabric.
